# EUROPEAN PATENT APPLICATION

(11) **EP 4 538 697 A1**
(43) Date of publication of application: **16.04.2025**
(21) Application number: 24205182.9
(22) Date of filing: 08.10.2024
(51) Int. Cl.: G01N 30/72

(54) **CARRIER GAS ION SCAVENGER TO REDUCE PEAK TAILING AND REACTIONS**

(30) Priority: 11.10.2023 US 202363589389 P
(71) Applicant: Thermo Finnigan LLC, San Jose, CA 95134 (US)
(72) Inventor: ZHENG, Xin, San Jose, 95134 (US); QUARMBY, Scott, San Jose, 95134 (US)
(74) Representative: Boult Wade Tennant LLP

(57) **Abstract**

A method for reducing peak tailing and reactions when using a carrier gas other than helium for gas chromatography-mass spectrometry(GC-MS) includes separating compounds using a gas chromatography column using a carrier gas other than helium; providing the column output to an ionization chamber of a mass spectrometer; providing a scavenger gas to the ionization chamber of the mass spectrometer; ionizing the compounds in the presence of the carrier gas and the scavenger gas; analyzing the ionized compounds using the mass spectrometer.

## Description

### FIELD

The present disclosure generally relates to the field of mass spectrometry including a carrier gas ion scavenger to reduce peak tailing and reactions.

### INTRODUCTION

Helium is considered the best gas chromatography (GC) carrier gas for gas chromatography-mass spectrometry (GC-MS). Helium is inert and has a very low electron ionization (EI) cross section which results in less space charge in the ion source. Helium is often the preferred carrier gas due to sensitivity, efficiency, chemical inertness, safety or other concerns. Additionally, the purity of the carrier gas flowing into the analytical column can be critical to data quality. Helium, especially high purity Helium, is becoming increasingly expensive and difficult to procure in some areas of the world. Further, Helium is not renewable as it escapes into space due to the low mass.

As such, replacing Helium as a carrier gas is desirable. From the foregoing it will be appreciated that a need exists for improved systems and methods that can utilize a carrier gas other than helium.

### BRIEF SUMMARY

In a first aspect, a system for performing gas chromatography-mass spectrometry(GC-MS) using a carrier gas other than helium includes a gas chromatography instrument including an injection port and a gas chromatography column; a carrier gas source coupled to an injection port of a gas chromatography instrument; a mass spectrometry instrument including an ionization chamber and a mass analyzer, the ionization chamber fluidly coupled with the gas chromatography column; and a scavenger gas supply for providing a scavenger gas to the ionization chamber.

In various embodiments of the first aspect, the scavenger gas having a lower ionization energy than the carrier gas.

In various embodiments of the first aspect, the scavenger gas is methane.

In various embodiments of the first aspect, the scavenger gas includes two or more gas species. In particular embodiments, each of the scavenger gas species has a lower ionization energy than the carrier gas. In particular embodiments, the scavenger gas includes methane and ammonia, such as the methane/ammonia mixture having a concentration of ammonia between about 1% and about 10%.

In various embodiments of the first aspect, the carrier gas is nitrogen.

In various embodiments of the first aspect, the carrier gas is hydrogen.

A method of reducing peak tailing and reactions when using a carrier gas other than helium for gas chromatography-mass spectrometry(GC-MS) including separating compounds using a gas chromatography column using a carrier gas other than helium; providing the column output to an ionization chamber of a mass spectrometer; providing a scavenger gas to the ionization chamber of the mass spectrometer; ionizing the compounds in the presence of the carrier gas and the scavenger gas; and analyzing the ionized compounds using the mass spectrometer.

In various embodiments of the second aspect, the scavenger gas has a lower ionization energy then the carrier gas.

In various embodiments of the second aspect, the scavenger gas is methane.

In various embodiments of the second aspect, the scavenger gas includes two or more gas species. In particular embodiments, each of the carrier gas species has a lower ionization energy than the carrier gas. In particular embodiments, the scavenger gas includes methane and ammonia, such as a mixture of methane and ammonia with a concentration of ammonia between about 1% and about 10%.

In various embodiments of the second aspect, the carrier gas is nitrogen.

In various embodiments of the second aspect, the carrier gas is hydrogen.

### DRAWINGS

For a more complete understanding of the principles disclosed herein, and the advantages thereof, reference is now made to the following descriptions taken in conjunction with the accompanying drawings and exhibits, in which:
Figure 1 is a block diagram of an exemplary mass spectrometry system, in accordance with various embodiments.
Figures 2A and 2B are diagrams illustrating exemplary chromatograms of a pesticide standard using helium as a carrier gas or nitrogen as a carrier gas.
Figures 3A and 3B are diagrams illustrating exemplary mass spectrum of deltamethrin when using helium as a carrier gas or nitrogen as a carrier gas. Figure 3C is a diagram illustrating the mass spectrum of deltamethrin from the NIST library.
Figure 4A is a flow diagram illustrating an exemplary method of using a scavenger gas with a carrier gas, in accordance with various embodiments.
Figure 4B is a diagram illustrating an exemplary system for using a scavenger gas with a carrier gas, in accordance with various embodiments.
Figures 5A, 5B, and 5C are diagrams illustrating exemplary chromatograms of a pesticide standard mass spectrum of deltamethrin when using nitrogen as a carrier gas along with a scavenger gas, in accordance with various embodiments.

It is to be understood that the figures are not necessarily drawn to scale, nor are the objects in the figures necessarily drawn to scale in relationship to one another.

The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for using a carrier gas ion scavenger to reduce peak tailing and reactions and increase response are described herein and in the accompanying exhibits.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

### MASS SPECTROMETRY PLATFORMS

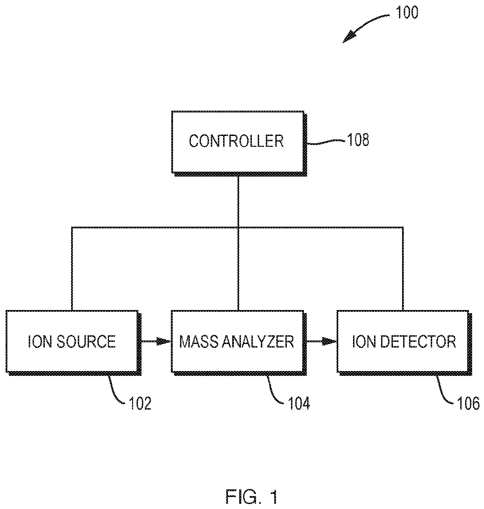

Various embodiments of mass spectrometry platform 100 can include components as displayed in the block diagram of Figure 1. In various embodiments, elements of Figure 1 can be incorporated into mass spectrometry platform 100. According to various embodiments, mass spectrometer 100 can include an ion source 102, a mass analyzer 104, an ion detector 106, and a controller 108.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the mass analyzer 104 can separate ions based on a mass to charge ratio of the ions. For example, the mass analyzer 104 can include a quadrupole mass filter analyzer, a quadrupole ion trap analyzer, a time-of-flight (TOF) analyzer, an electrostatic trap (e.g., ORBITRAP) mass analyzer, Fourier transform ion cyclotron resonance (FT-ICR) mass analyzer, and the like. In various embodiments, the mass analyzer 104 can also be configured to fragment the ions using collision induced dissociation (CID) electron transfer dissociation (ETD), electron capture dissociation (ECD), photo induced dissociation (PID), surface induced dissociation (SID), and the like, and further separate the fragmented ions based on the mass-to-charge ratio.

In various embodiments, the ion detector 106 can detect ions. For example, the ion detector 106 can include an electron multiplier, a Faraday cup, and the like. Ions leaving the mass analyzer can be detected by the ion detector. In various embodiments, the ion detector can be quantitative, such that an accurate count of the ions can be determined.

In various embodiments, the controller 108 can communicate with the ion source 102, the mass analyzer 104, and the ion detector 106. For example, the controller 108 can configure the ion source or enable/disable the ion source. Additionally, the controller 108 can configure the mass analyzer 104 to select a particular mass range to detect. Further, the controller 108 can adjust the sensitivity of the ion detector 106, such as by adjusting the gain. Additionally, the controller 108 can adjust the polarity of the ion detector 106 based on the polarity of the ions being detected. For example, the ion detector 106 can be configured to detect positive ions or be configured to detected negative ions.

### CARRIER GAS

Helium is still considered the best gas chromatography (GC) carrier gas for GC-MS. It is inert and has a very low electron ionization (EI) cross section which means less space charge in the ion source.

Hydrogen is inexpensive, easy to make, and results in a shorter separation time. However, it is flammable and causes peak tailing and reactions. Solutions to this include various surface coatings (see US 10,012,623, C.P. Essences; EP 3,454,359, C.P. Essences; & US 20210305036, Agilent). Also, hydrogen can cause issues with maintaining sufficiently high vacuum within the mass spectrometer system. Lower compression of the turbo pump for hydrogen can lead to an unacceptably high pressure within the MS system or require larger or multiple vacuum pumps. This can be especially problematic for ultra-high vacuum (UHV) MS systems.

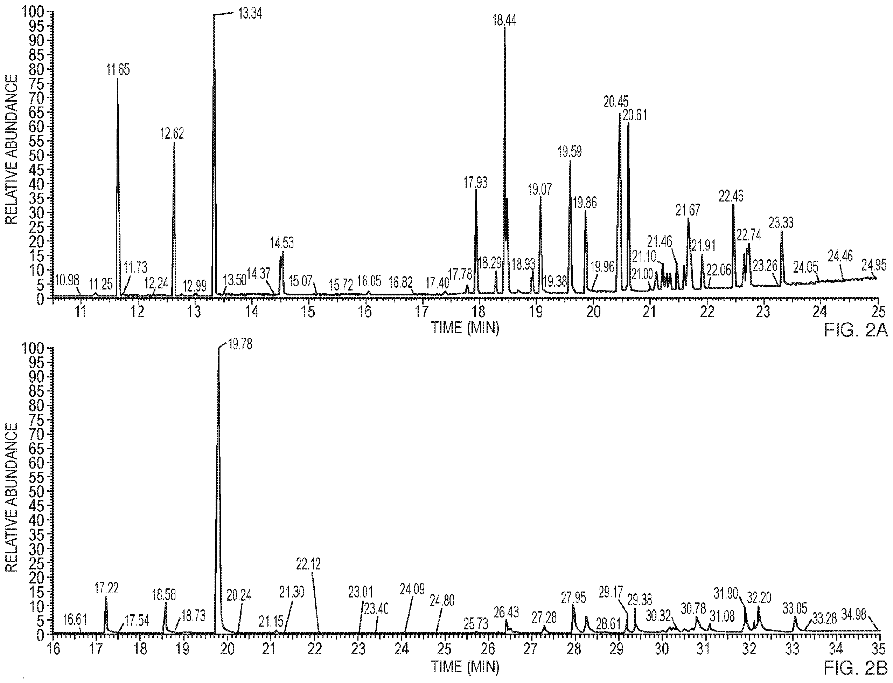

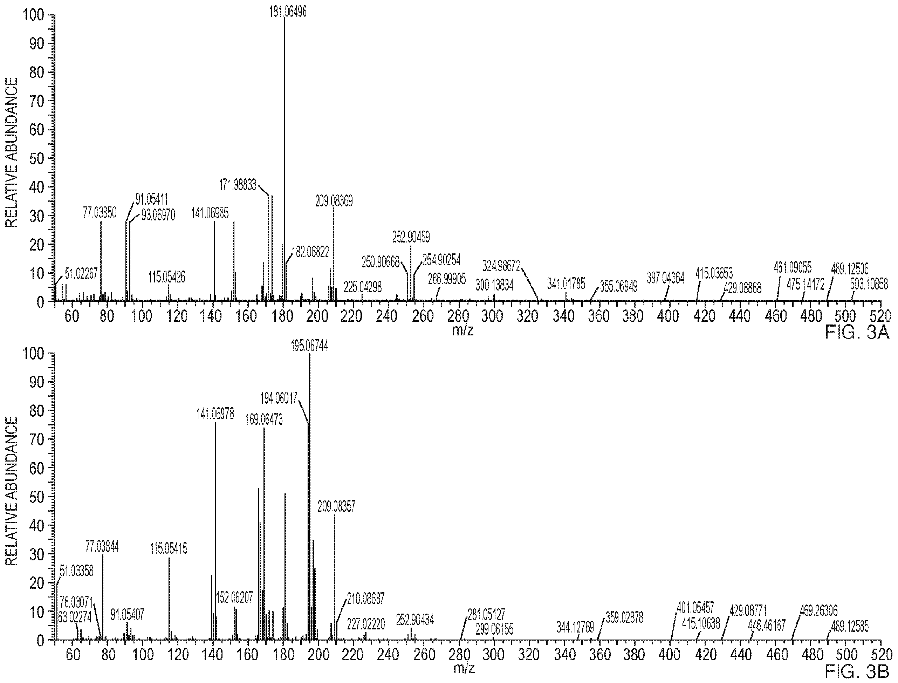

Nitrogen is not flammable, inexpensive, and easy to make. It is also compatible with vacuum pumping systems used in MS systems. However, it also causes peak tailing (see Fig. 2B) and reactions (see Fig. 3B).

Fig. 2A shows a chromatogram of Restek GC Multiresidue Pesticides Standard #6 using helium as the carrier gas. Fig. 2B shows a chromatogram of Restek GC Multiresidue Pesticides Standard #6 using nitrogen as a carrier gas. Peak trailing can be observed when using nitrogen as a carrier gas. Additionally, the relative abundance of some of the compounds changes significantly when using nitrogen as the carrier gas compared to helium.

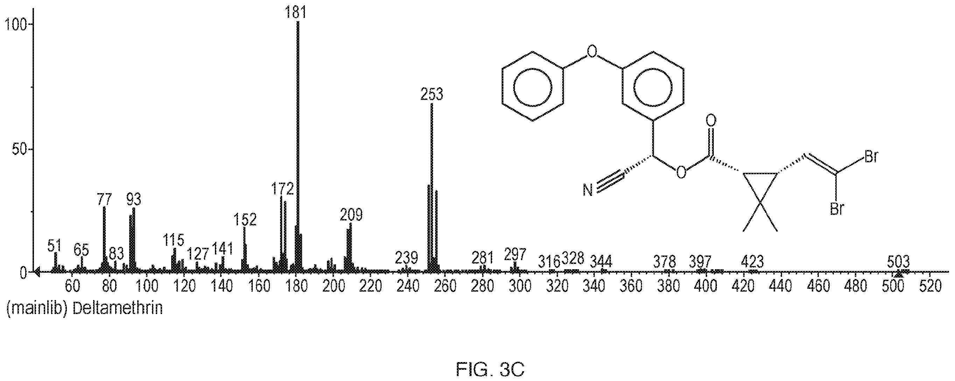

Fig. 3A shows a mass spectrum of deltamethrin using helium as the carrier gas, Fig. 3B shows a mass spectrum of deltamethrin using nitrogen as the carrier gas. Fig. 3C shows the mass spectrum of deltamethrin from the NIST library. There are significant differences in the mass spectrum of Fig. 3B compared to the mass spectrum of 3A and 3C. In particular, there are lower abundances of the high m/z ions (e.g. m/z 253, 297), much lower m/z 181, and a m/z 195 which does not appear with helium (Fig. 3A) or in the NIST library (Fig. 3C). Accurate mass analysis shows that m/z 195 is the m/z 181 with the addition of a nitrogen atom, likely due to a reaction with the nitrogen carrier gas.

### SCAVENGER GAS

In various embodiments, a scavenger gas can be added to reduce peak tailing and reactions caused by the non-helium carrier gas. In various embodiments, the scavenger gas can include one or more gasses or liquids. In particular embodiments, at least one of the carrier gas species has a lower ionization energy than the carrier gas, such as all the carrier gas species have a lower ionization energy than the carrier gas. In various embodiments, the lower ionization energy of the scavenger gas enables the scavenger gas to undergo charge exchange with carrier gas ions that are produced in the ionization chamber, thereby reducing peak tailing and reactions between the carrier gas ions and the compounds.

Additionally, it may be advantageous for the scavenger to have low ionization cross section to reduce direct formation of scavenger gas ions. Table 1 shows the ionization energy (eV) and relative ionization cross section for some of the various gases that could be used as a scavenger gas. These scavenger gases have a lower ionization energy than nitrogen (15.581 eV) and hydrogen (15.42593 eV).

**Table 1. Possible Scavenger Gases**

| **Name** | **Formula** | **MW** | **Ionization Energy (eV)** | **Relative Ionization Cross Section (fewer ions if lower)** |
|---|---|---|---|---|
| Oxygen | O2 | 31.9988 | 12.0697 | 0.87 |
| Water | H2O | 18.0153 | 12.621 | 0.97 |
| Ammonia | NH3 | 17.0305 | 10.02 | 1.12 |
| Nitrous Oxide | N2O | 44.0128 | 12.889 | 1.2 |
| Carbon Dioxide | CO2 | 44.0095 | 13.777 | 1.3 |
| Methane | CH4 | 16.0425 | 12.51 | 1.62 |
| Methanol | CH4O | 32.0419 | 10.84 | 1.69 |
| Krypton | Kr | 83.7982 | 13.99961 | 1.92 |
| Acetonitrile | C2H3N | 41.0519 | 12.2 | 1.99 |
| Ethanol | C2H5OH | 46.07 | 10.41 | 2.04 |
| Acetone | (CH3)2CO | 58.0791 | 9.703 | 2.5 |
| Xenon | Xe | 131.2936 | 12.12987 | 2.78 |
| Benzene | C6H6 | 78.114 | 9.24378 | 4.29 |
| Tetrachloroethane, 1,1,2,2- | C2H2Cl4 | 167.838 | 11.1 | 4.44 |
| Isobutane | C4H10 | 58.122 | 10.68 | 4.46 |
| Chlorobenzene | C6H5Cl | 112.556 | 9.07 | 4.88 |
| Toluene | C7H8 | 92.141 | 8.828 | 5.56 |
| Octane | C8H18 | 114.232 | 9.8 | 7.21 |

In various embodiments, the scavenger gas can include methane, ammonia, isobutane, or any combination thereof. In particular embodiments, the scavenger gas can include a mixture of gases, such as a mixture of methane and ammonia, for example a mixture of methane and ammonia with a concentration of ammonia between about 1% and about 10%.

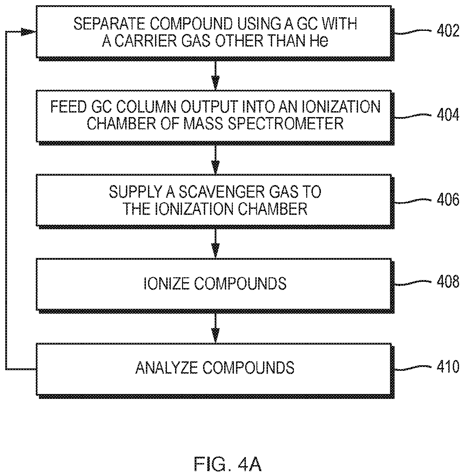

Fig. 4A is a flow diagram illustrating a method of using a scavenger gas to improve the peak shape and reduce reactions when using a carrier gas other than helium. At 402, compounds can be separated using a GC column with a carrier gas other than helium. For example, the carrier gas can be hydrogen or nitrogen. At 404, the column output can be fed into an ionization chamber of a mass spectrometer.

At 406, a scavenger gas can be supplied to the ionization chamber. In various embodiments, the scavenger gas can be supplied directly into the ionization chamber. In other embodiments, the scavenger gas can be supplied to an area around the ionization chamber and can diffuse into the ionization chamber. In yet other embodiments, the scavenger gas can be mixed with the output of the column prior to being fed into the ionization chamber. In yet other embodiments, the scavenger gas can be mixed with the carrier gas prior to the GC column such that the column output contains the carrier gas along with the scavenger gas. In various embodiments, the scavenger gas can include methane, ammonia, isobutane, or any combination thereof.

At 408, the compounds can be ionized in the presence of the carrier gas and the scavenger gas, and at 410, the ionized compounds can be analyzed by mass spectrometry.

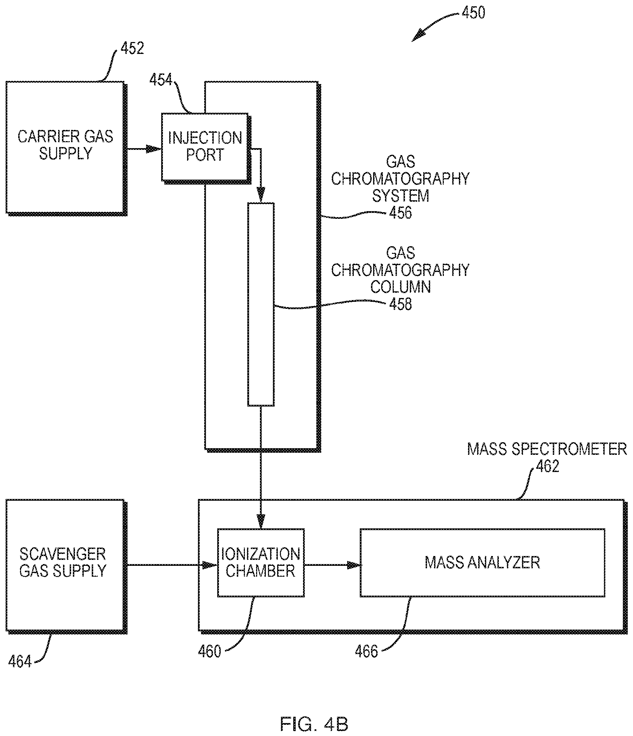

Fig. 4B illustrates an exemplary GC-MS system 450 using a scavenger gas to reduce tailing and reactions with a non-helium carrier gas. A carrier gas supply 452 can provide a flow of carrier gas to an injection port 454 of a gas chromatography system 456. In various embodiments, the carrier gas supply 452 can be a hydrogen gas supply, such as a hydrogen generator or a hydrogen gas cylinder. In other embodiments, the carrier gas supply 452 can be a nitrogen supply, such as a nitrogen gas cylinder or a nitrogen generator. In yet other embodiments, the carrier gas supply 452 can be a supply of any gas compatible with gas chromatography other than helium.

The carrier gas can flow from the injection port 454 into a GC column 458. In various embodiments, the carrier gas can be mixed with compounds of a sample within the injection port 454 and carry the compounds into the GC column 458. The GC column 458 can be used to separate compounds in the sample based on the interactions between the compounds and a stationary phase of the GC column 458. These interactions can result in different retention times for different compounds.

The output of the GC column 458 feeds into an ionization chamber 460 of a mass spectrometer 462. A scavenger gas supply 464 can supply scavenger gas into the ionization chamber. In various embodiments, the scavenger gas can include multiple scavenger gas species. The multiple scavenger gas species can be a premixed supply or can be separate supplies that are mixed together when mixed with the carrier gas. In various embodiments, one or more of the scavenger gas species can be provided as a liquid that is volatilized prior to or at the same time as being mixed with the carrier gas. In the embodiment shown in Fig. 4B, the scavenger gas can be fed directly into the ionization chamber 458. In other embodiments, the scavenger gas can be fed into an area adjacent to the ionization chamber 460 and diffuse into the ionization chamber 460. In yet other embodiments, the scavenger gas may be mixed with the carrier gas either before the injection port 454, between the injection port 454 and the GC column 458, or after the GC column 458 and supplied to the ionization chamber 460 along with the carrier gas.

The ionization chamber 460 can ionize the compounds, such as by electron ionization or chemical ionization. The ionized compounds can go to a mass analyzer 466. The mass analyzer 466 can be a quadrupole mass filter analyzer, a quadrupole ion trap analyzer, a time-of-flight (TOF) analyzer, an electrostatic trap (e.g., ORBITRAP) mass analyzer, Fourier transform ion cyclotron resonance (FT-ICR) mass analyzer, other suitable mass analyzers, or any combination thereof. The mass analyzer 466 can analyze the compounds to determine the mass-to-charge (m/z) ratio of the ionized compounds, m/z ratio of ion fragments produced from the ionized compounds, or any combination thereof.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the spirit and scope of the various embodiments.

### EXAMPLES

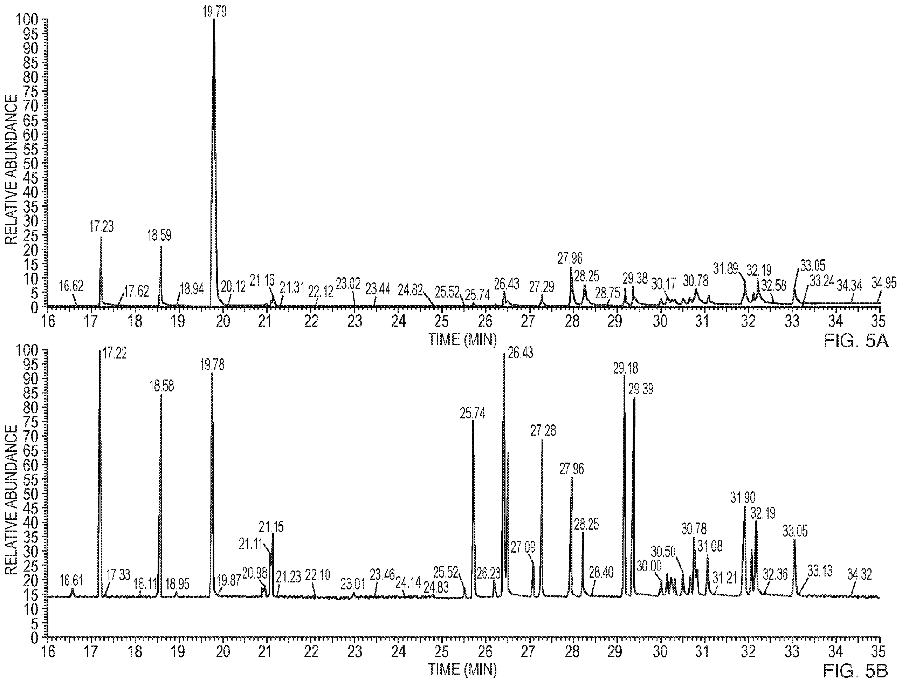

Fig. 5A shows a chromatogram of Restek GC Multiresidue Pesticides Standard #6 using nitrogen as the carrier gas with the addition of 0.3 mL/min of methane.

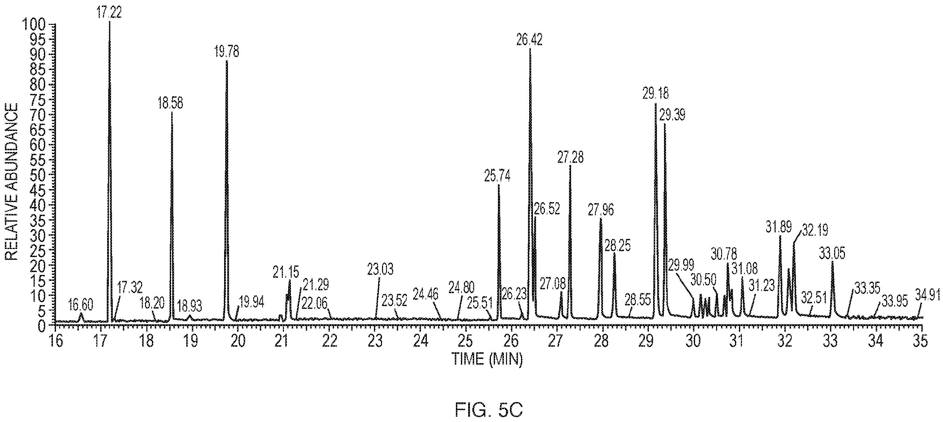

Fig. 5B shows a chromatogram of Restek GC Multiresidue Pesticides Standard #6 using nitrogen as a carrier gas with the addition of 1.5 mL/min of methane. Fig. 5C shows a chromatogram of Restek GC Multiresidue Pesticides Standard #6 using nitrogen as a carrier gas with the addition of 1.5 mL/min of methane with 5% ammonia. Peak trailing and reactions are still observable at the lower amount of methane as seen in Fig. 5A. Increasing the methane significantly reduces the peak trailing and reactions but, but results in a high baseline, as seen in Fig. 5B. The addition of 5% ammonia results in good peak shape, no reactions, and a lower baseline, as seen in Fig. 5C.

## Claims

1. A system for performing gas chromatography-mass spectrometry (GC-MS) using a carrier gas other than helium comprising:
a gas chromatography instrument including an injection port and a gas chromatography column;
a carrier gas source coupled to an injection port of a gas chromatography instrument;
a mass spectrometry instrument including an ionization chamber and a mass analyzer, the ionization chamber fluidly coupled with the gas chromatography column; and
a scavenger gas supply for providing a scavenger gas to the ionization chamber.

2. The system of claim 1 wherein the scavenger gas has a lower ionization energy than the carrier gas.

3. The system of claim 1 wherein the scavenger gas is either methane or isobutane.

4. The system of claim 1 wherein the scavenger gas includes two or more gas species.

5. The system of claim 4 wherein each of the scavenger gas species has a lower ionization energy than the carrier gas.

6. The system of claim 4 wherein the scavenger gas includes methane and ammonia.

7. The system of claim 6 wherein the ammonia is at a concentration of between about 1% and about 10%.

8. The system of any preceding claim, wherein the carrier gas is either nitrogen or
hydrogen.

9. A method of reducing peak tailing and reactions when using a carrier gas other than helium for gas chromatography-mass spectrometry(GC-MS), comprising:
separating compounds using a gas chromatography column using a carrier gas other than helium;
providing the column output to an ionization chamber of a mass spectrometer;
providing a scavenger gas to the ionization chamber of the mass spectrometer;
ionizing the compounds in the presence of the carrier gas and the scavenger gas; and
analyzing the ionized compounds using the mass spectrometer.

10. The method of claim 9 wherein the scavenger gas has a lower ionization energy then the carrier gas.

11. The method of claim 9 wherein the scavenger gas is either methane or isobutane.

12. The method of claim 9, wherein the scavenger gas includes two or more gas species.

13. The method of claim 12, wherein each of the carrier gas species has a lower ionization energy than the carrier gas.

14. The method of claim 12, wherein the scavenger gas includes methane and ammonia.

15. The method of claim 14 wherein the ammonia is at a concentration of between about 1% and about 10%.

16. The method of any one of claims 9 to 15, wherein the carrier gas is either nitrogen or
hydrogen.
